# EUROPÄISCHE PATENTSCHRIFT

(11) **EP 0 570 959 B1**
(45) Veröffentlichungstag und Bekanntmachung des Hinweises auf die Patenterteilung: **23.08.1995**
(21) Anmeldenummer: 93108207.7
(22) Anmeldetag: 19.05.1993
(51) Int. Cl.: C02F 1/28

(54) **Anordnung zur Trinkwasserreinigung**
Device for purifying drinking water
Dispositif pour la purification de l'eau potable

(30) Priorität: 20.05.1992 DE 9206864 U
(43) Veröffentlichungstag der Anmeldung: 24.11.1993
(73) Patentinhaber: Glöde, Willi, W-7900 Ulm-Lehr (DE)
(72) Erfinder: Glöde, Willi, W-7900 Ulm-Lehr (DE)
(74) Vertreter: Schlimme, Wolfram, Dr.-Ing.

(56) Entgegenhaltungen:
- EP-A- 0 296 043
- DE-A- 2 143 224
- DE-A- 3 330 216
- DE-A- 3 330 217
- DE-U- 9 013 788
- US-A- 3 715 032
- US-A- 4 599 171

## Beschreibung

Die Erfindung betrifft eine Anordnung zur Trinkwasserreinigung mit einem von unter Druck stehendem Wasser durchströmten, Aktivkohle enthaltenden Behälter mit einem Zuflußanschluß für das Rohwasser und einem Abflußanschluß für das Reinwasser.

Derartige Anordnungen zur Trinkwasserreinigung sind aus fest in einer Wasserversorgung installierten Anordnungen bekannt, wobei nach einer vorbestimmten Zeit der die Aktivkohle enthaltende Behälter ausgetauscht werden muß. Dieser Austausch ist häufig nur von Installateuren oder handwerklich geschickten Menschen durchführbar.

Aufgabe der vorliegenden Erfindung ist es, eine Anordnung zur Trinkwasserreinigung der eingangs genannten Gattung so auszubilden, daß sie einfach installierbar ist und daß der Austausch des die Aktivkohle enthaltenden Behälters auch von Laien schnell und einfach durchführbar ist.

Diese Aufgabe wird gemäß der Erfindung dadurch gelöst, daß der Zuflußanschluß und der Abflußanschluß jeweils eine Schnellkupplungsverbindung aufweisen, daß die Schnellkupplungsverbindung des Zuflußanschlusses auf der vom Behälter abgewandten Seite mit einer zu einem Rohwasser-Anschlußorgan führenden Leitung verbunden ist und daß die Schnellkupplungsverbindung des Abflußanschlusses mit einem Reinwasser-Auslaßorgan verbunden ist.

Durch das Vorsehen der Schnellkupplungsverbindungen im Zuflußanschluß und im Abflußanschluß des Behälters kann dieser durch einfaches Lösen der Schnellkupplungsverbindungen sowie einer gegebenenfalls vorhandenen mechanischen Halterung entfernt werden. Der Einbau eines neuen Behälters derselben Art ist auf umgekehrte Weise durch Zusammenstecken der Schnellkupplungsverbindungen ebenfalls problemlos für jeden Laien durchführbar.

Das Vorsehen einer Verrastungssicherung gemäß Anspruch 3 sorgt dafür, daß ein unbeabsichtigtes Lösen der Schnellkupplungsverbindung verhindert wird.

Vorteilhaft ist auch die Anordnung gemäß Anspruch 4, da das Vorsehen eines selbstabsperrenden Ventils in der Schnellkupplungsverbindung das Vorsehen eines zusätzlichen Absperrventils in der entsprechenden Leitung überflüssig macht, so daß der Austausch des Behälters ohne Kenntnisse der Lage irgendwelcher Sperreinrichtungen durchführbar ist.

Werden die selbstabsperrenden Ventile gemäß Anspruch 5 sowohl bei der Schnellkupplungsverbindung des Zuflußanschlusses als auch bei der Schnellkupplungsverbindung des Abflußanschlusses jeweils am druckseitigen, stromaufwärts gelegenen Teil der Schnellkupplungsverbindung vorgesehen, so können die beiden Schnellkupplungsverbindungen in beliebiger Reihenfolge getrennt werden, wodurch sich eine weitere vereinfachte Handhabung ergibt.

Die Ausbildung der Anordnung gemäß Anspruch 6 gestattet das einfache Anschließen der erfindungsgemäßen Anordnung an eine vorhandene Wasserleitung, ohne daß zusätzliche Abzweigeinrichtungen in der Wasserleitung montiert werden müssen.

Die verbleibenden Ansprüche geben weitere vorteilhafte Ausbildungen der Erfindung an.

Die Erfindung wird nachfolgend anhand eines Beispiels unter Bezugnahme auf die Zeichnung näher erläutert; in dieser zeigt:
- Fig. 1: eine schematische Darstellung der erfindungsgemäßen Anordnung und
- Fig. 2: ein Rohwasseranschlußorgan.

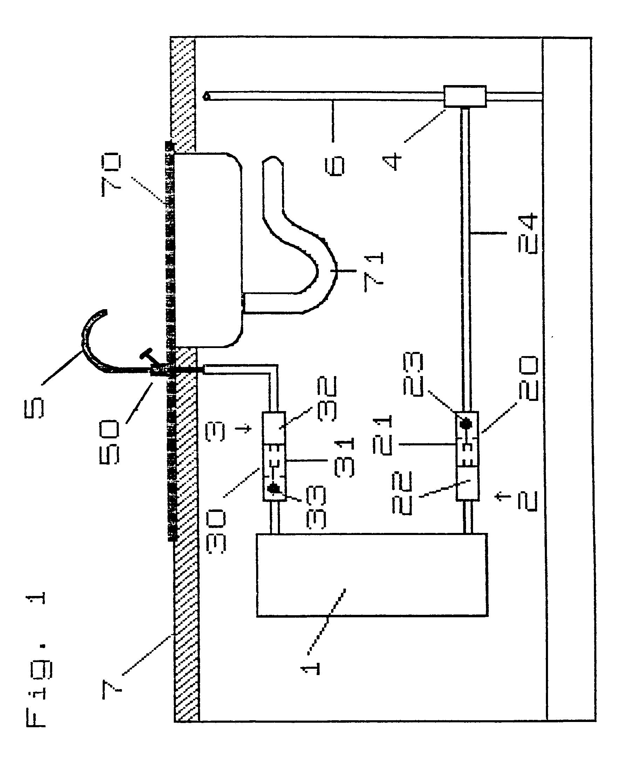

In Fig. 1 ist schematisch ein teilweise geschnittener Spülenschrank 7 mit einer eingesetzten Spüle 70 und einem Abfluß 71 dargestellt. Eine Rohwasserleitung 6 führt zu einem nicht dargestellten Rohwasserventil. An der Rohwasserleitung 6 ist ein Rohwasser-Anschlußorgan 4 angebracht, mit dem Wasser aus der Rohwasserleitung 6 entnommen und in eine Zweigleitung 24 geleitet wird.

Unterhalb der Spüle ist im Spülenschrank 7 ein Behälter 1 zur Trinkwasserreinigung angebracht. Der Behälter 1 enthält behandelte, beispielsweise gesilberte, Aktivkohle und bewirkt dadurch ein Entfernen von Schadstoffen, insbesondere Kohlenwasserstoffen, aus dem Trinkwasser.

An seinem unteren Endabschnitt ist der Behälter 1 mit einem Zuflußanschluß 2 versehen und an seinem oberen Endbereich weist der Behälter 1 einen Abflußanschluß 3 auf.

Sowohl der Zuflußanschluß 2 als auch der Abflußanschluß 3 umfassen jeweils eine Schnellkupplungsverbindung 20 bzw. 30, die ein schnelles Anschließen und Entfernen des Behälters 1 gestatten.

Die Schnellkupplungsverbindung 20 des Zuflußanschlusses 2 ist auf der vom Behälter 1 abgewandten Seite mit der zum Rohwasser-Anschlußorgan 4 führenden Zweigleitung 24 verbunden. Die Schnellkupplungsverbindung 30 des Abflußanschlusses ist an ihrer vom Behälter 1 abgewandten Seite über eine Leitung mit einem Reinwasser-Auslaßorgan 5, einem Wasserhahn, verbunden.

Die Schnellkupplungsverbindung 20 des Zuflußanschlusses 2 besteht aus einem mit der Leitung 24 in Verbindung stehenden Kupplungsteil 21 und einem mit dem Behälter 1 in Verbindung stehenden Steckerteil 22. Kupplungsteil 21 und Steckerteil 22 sind so ausgebildet, daß sie abdichtend miteinander kuppelbar und verrastbar sind. Das mit der Druck führenden Leitung 24 verbundene Kupplungsteil 21 ist mit einem selbstabsperrenden Ventil 23 versehen, das beispielsweise unter Federkraft in eine Absperrstellung vorgespannt ist, in welcher ein Ventilkörper dichtend an einem Ventilsitz anliegt. Beim Einstecken des Steckerteils 22 in das Kupplungsteil 21 wird das Ventil 23 vom Steckerteil derart betätigt, daß im abgedichteten, eingekuppelten Zustand eine Fluidverbindung zwischen der Leitung 24 und dem Behälter 1 hergestellt ist.

Die Schnellkupplungsverbindung 30 des Abflußanschlusses 3 ist in gleicher Weise aufgebaut und besitzt ein Steckerteil 32, das in ein mit einem selbstabsperrenden Ventil 33 versehenes Kupplungsteil 31 dichtend einsetzbar und verrastbar ist. Das mit dem selbstabsperrenden Ventil 33 versehene Kupplungsteil liegt dabei auf der druckseitigen, zum Behälter 1 gewandten Seite und das Steckerteil 32 liegt auf der zum Reinwasser-Auslaßorgan 5 gewandten Seite. Durch die Schnellkupplungsverbindung 30 wird so eine Fluidverbindung zwischen dem Behälter 1 und dem Reinwasser-Auslaßorgan 5 hergestellt, das seinerseits mit einem Absperr- und/oder Regelventil 50 versehen ist.

Auf diese Weise kann unter Druck stehendes Wasser aus der Rohwasserleitung 6 über das Rohwasser-Anschlußorgan 4 durch die Leitung 24, die Schnellkupplungsverbindung 20 in den Behälter 1 fließen, wo es durch das Aktivkohlebett strömt und gereinigt wird. Aus dem Behälter 1 fließt das Wasser dann durch die Schnellkupplungsverbindung 30 und die zum Reinwasser-Auslaßorgan 5 führende Leitung in das Reinwasser-Auslaßorgan, wo es entnommen werden kann.

Die geschilderte Anordnung der selbstabsperrenden Ventile 23 und 33 jeweils auf der Druckseite besitzt den Vorteil, daß es unerheblich ist, welche der beiden Schnellkupplungsverbindungen 20, 30 beim Entfernen des Behälters 1 zuerst gelöst wird, da jeweils das jeweilige Ventil 23 bzw. 33 die Fluidverbindung druckseitig abriegelt.

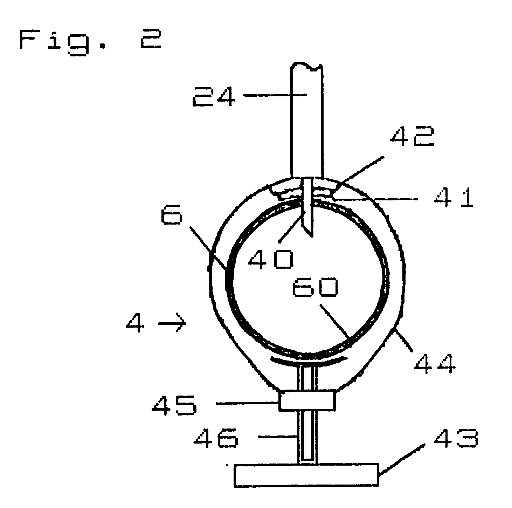

In Fig. 2 ist ein Rohwasser-Anschlußorgan 4 dargestellt, das ein besonders schnelles und problemloses Anschließen der Leitung 24 an eine Rohwasserleitung 6 gestattet. Dazu ist am Ende der Leitung 24 ein mit einer Andruckplatte 42 versehenes Kanülenteil 40 vorgesehen, wobei das freie Ende des hohl ausgebildeten Kanülenteils angespitzt ist, um die Wandung 60 des Wasserrohres 6 der Rohwasserleitung durchstoßen zu können.

Die Andruckplatte 42 ist dabei auf der dem Wasserrohr 6 zugewandten Seite mit einer das Kanülenteil 40 umgebenden Dichtung 41 versehen.

Eine Spanneinrichtung 44, 45, 46, 43 besteht aus einem das Wasserrohr umgreifenden Spannband 44, dessen eines Ende an der Andruckplatte 42 befestigt ist und dessen anderes Ende auf der von der Andruckplatte 42 abgewandten Seite des Wasserrohres mit einer Mutter 45 versehen ist, die auf einer Gewindestange 46 aufgeschraubt ist. Die Gewindestange 46 ist an ihrem einen Ende mit einem Drehhebel 43 versehen und stützt sich an ihrem anderen Ende mittels einer Druckplatte gegen das Wasserrohr 6 ab, wobei die Abstütztstelle diagonal gegenüber dem Kanülenteil 40 gelegen ist.

Wird die Gewindestange 46 mittels des Drehhebels 43 (bei einem Rechtsgewinde) im Uhrzeigersinn gedreht, so wandert die Mutter 45 auf der Gewindestange 46 vom Wasserrohr 6 weg und spannt auf diese Weise das Spannband 44, wodurch das Kanülenteil 40 radial einwärts gegen die Wandung 60 des Wasserrohres gedrückt wird und dabei die Wandung 60 des Wasserrohres durchstößt. Ein weitergehendes Festspannen bewirkt, daß die Andruckplatte 42 in dichtende Anlage an die Wandung 60 des Wasserrohres 6 gerät, wobei die Dichtung 41 zwischen der Wandung 60 des Wasserrohres und der Andruckplatte 42 eingespannt wird.

Dieses vorteilhafte Perforationsprinzip kann auch auf andere Weise realisiert werden, um die Leitung 24 auf einfache Weise an eine Druck führende Rohwasserleitung 6 anzuschließen.

## Patentansprüche

1. Anordnung zur Trinkwasserreinigung mit einem von unter Druck stehenden Wasser durchströmten, Aktivkohle enthaltenden Behälter (1) mit einem Zuflußanschluß (2) für das Rohwasser und einem Abflußanschluß (3) für das Reinwasser,
dadurch **gekennzeichnet**,
daß der Zuflußanschluß (2) und der Abflußanschluß (3) jeweils eine Schnellkupplungsverbindung (20; 30) aufweisen, daß die Schnellkupplungsverbindung (20) des Zuflußanschlusses (2) auf der vom Behälter (1) abgewandten Seite mit einer zu einem Rohwasser-Anschlußorgan (4) führenden Leitung (24) verbunden ist und
daß die Schnellkupplungsverbindung (30) des Abflußanschlusses (3) mit einem Reinwasser-Auslaßorgan (5) verbunden ist.

2. Anordnung zur Trinkwasserreinigung nach Anspruch 1,
dadurch **gekennzeichnet,**
daß die Schnellkupplungsverbindung (20; 30) ein Kupplungsteil 21; 31) und ein Steckerteil (22; 32) aufweist, das zum Herstellen einer Fluidverbindung abdichtend in das Kupplungsteil (21; 31) einsteck- und verrastbar ist.

3. Anordnung zur Trinkwasserreinigung nach Anspruch 1 oder 2,
dadurch **gekennzeichnet**,
daß für die Schnellkupplungsverbindung (20; 30) eine Verrastungssicherung vorgesehen ist, die ein unbeabsichtigtes Entkuppeln verhindert.

4. Anordnung zur Trinkwasserreinigung nach einem der vorhergehenden Ansprüche,
dadurch **gekennzeichnet,**
daß die Schnellkupplungsverbindung (20; 30) mit einem selbstabsperrenden Ventil (23; 33) versehen ist , das beim Zusammenkuppeln von Kupplungsteil (21; 31) und Steckerteil (22; 32), insbesondere beim Verrasten, öffnet und die Fluidverbindung freigibt und das beim Entkuppeln von Kupplungsteil (21; 31) und Steckerteil (22; 23), insbesondere beim Lösen der Verrastung, schließt und die Fluidverbindung unterbricht.

5. Anordnung zur Trinkwasserreinigung nach einem der vorhergehenden Ansprüche,
dadurch **gekennzeichnet**,
daß das selbstabsperrende Ventil (23; 33) sowohl bei der Schnellkupplungsverbindung (20) des Zuflußanschlusses als auch bei der Schnellkupplungsverbindung (30) des Abflußanschlusses am druckseitigen, stromaufwärts gelegenen Teil (Kupplungsteil oder Steckerteil) der jeweiligen Schnellkupplungsverbindung (20; 30) vorgesehen ist.

6. Anordnung zur Trinkwasserreinigung nach einem der vorhergehenden Ansprüche
dadurch **gekennzeichnet,**
daß das Rohwasser-Anschlußorgan (4) ein die Wandung eines Wasserrohres (6) durchstoßendes Kanülenteil (40) umfaßt, das von einer mit einer Dichtung (41) versehenen Andruckplatte (42) umgeben ist.

7. Anordnung zur Trinkwasserreinigung nach einem der vorhergehenden Ansprüche
dadurch **gekennzeichnet**,
daß der Behälter (1) gesilberte Aktivkohle enthält.

8. Anordnung zur Trinkwasserreinigung nach einem der vorhergehenden Ansprüche,
dadurch **gekennzeichnet**,
daß das Reinwasser-Auslaßorgan (5) von einem Wasserhahn gebildet ist.

## Claims

1. Arrangement for the purification of drinking water comprising a vessel (1) which contains activated carbon and is flowed through by pressurized water, said vessel having a supply connection (2) for the untreated water and an outflow connection (3) for the purified water, characterized in that the supply connection (2) and the outflow connection (3) each have a quick-fit union (20; 30); in that the quick-fit union (20) of the supply connection (2) is connected by its end lying remote from the vessel (1) to a line (24) leading to an untreated water connection member (4); and in that the quick-fit union (30) of the outflow connection (3) is connected to a purified water outlet member (5).

2. Arrangement for the purification of drinking water in accordance with claim 1, characterized in that the quick-fit union (20; 30) comprises a coupling part (21; 31) and a plug part (22; 32), wherein the plug part can be sealingly plugged into and latched to the coupling part (21; 31) in order to establish a fluid connection.

3. Arrangement for the purification of drinking water in accordance with claim 1 or 2, characterized in that latch safety means are provided for the quick-fit union (20; 30) to prevent unintentional decoupling.

4. Arrangement for the purification of drinking water in accordance with one of the preceding claims, characterized in that the quick-fit union (20; 30) is provided with a self-closing valve (23; 33) which, on coupling together of the coupling part (21; 31) and the plug part (22; 32), in particular on latching, opens and frees up the fluid connection and which, on decoupling of the coupling part (21; 31) and plug part (22; 32), in particular on release of the latching, closes and interrupts the fluid connection.

5. Arrangement for the purification of drinking water in accordance with one of the preceding claims, characterized in that, both for the quick-fit union (20) of the supply connection as well as for the quick-fit union (30) of the outflow connection, the self-closing valve (23; 33) is provided on the part of each quick-fit union (20; 30) (coupling part or plug part) that lies upstream on the pressurized side.

6. Arrangement for the purification of drinking water in accordance with one of the preceding claims, characterized in that the untreated water connection member (4) comprises a hollow needle part (40) breaking through a wall of a water pipe (6) and surrounded by a contact plate (42) provided with a seal (41).

7. Arrangement for the purification of drinking water in accordance with one of the preceding claims, characterized in that the vessel (1) contains silvered activated carbon.

8. Arrangement for the purification of drinking water in accordance with one of the preceding claims, characterized in that the purified water outlet member (5) is formed by a water tap.

## Revendications

1. Agencement pour la purification d'eau potable, comprenant un récipient (1) qui contient du charbon actif et qui est traversé par de l'eau sous pression, comportant un raccord d'entrée (2) pour l'eau brute et un raccord de sortie (3) pour l'eau purifiée, caractérisé en ce que
le raccord d'entrée (2) et le raccord de sortie (3) comportent chacun une liaison à accouplement rapide (20 ; 30),
en ce que la liaison à accouplement rapide (20) du raccord d'entrée (2) est reliée sur le côté détourné du récipient (1) à une conduite (24) qui mène à un organe de raccordement (4) pour l'eau brute, et
en ce que la liaison à accouplement rapide (30) du raccord de sortie (3) est reliée à un organe d'échappement (5) pour l'eau pure.

2. Agencement pour la purification d'eau potable, selon la revendication 1, caractérisé en ce que la liaison à accouplement rapide (20 ; 30) comporte une partie femelle (21 ; 31) et une partie mâle (22 ; 32) qui peut être enfichée et bloquée de façon étanche dans la partie femelle (21 ; 31) pour établir une liaison fluide.

3. Agencement pour la purification d'eau potable, selon l'une ou l'autre des revendications 1 et 2, caractérisé en ce que pour la liaison à accouplement rapide (20 ; 30) il est prévu une sécurité à blocage qui empêche un désaccouplement involontaire.

4. Agencement pour la purification d'eau potable, selon l'une quelconque des revendications précédentes, caractérisé en ce que la liaison à accouplement rapide (20 ; 30) est pourvue d'une valve (23 ; 33) à fermeture automatique, qui s'ouvre lors de l'accouplement de la partie femelle (21 ; 31) et de la partie mâle (22 ; 32) en particulier lors du blocage, et qui libère la liaison fluide, et qui se ferme lors du désaccouplement de la partie femelle (21 ; 31) et de la partie mâle (22 ; 23), en particulier lors du relâchement du blocage, et qui interrompt la liaison fluide.

5. Agencement pour la purification d'eau potable, selon l'une quelconque des revendications précédentes, caractérisé en ce que la valve à fermeture automatique (23 ; 33) est prévue aussi bien dans la liaison à accouplement rapide (20) du raccord d'entrée que dans la liaison à accouplement rapide (30) du raccord de sortie, sur la partie (partie femelle ou partie mâle) de la liaison à accouplement rapide (20 ; 30) respective, située en amont côté pression.

6. Agencement pour la purification d'eau potable, selon l'une quelconque des revendications précédentes, caractérisé en ce que l'organe de raccordement pour l'eau brute (4) comprend une partie en forme de canule (40) qui traverse la paroi d'un tube à eau (6), qui est entourée par une plaque d'appui (42) pourvue d'un joint (41).

7. Agencement pour la purification d'eau potable, selon l'une quelconque des revendications précédentes, caractérisé en ce que le récipient (1) contient du charbon actif à l'argent.

8. Agencement pour la purification d'eau potable, selon l'une quelconque des revendications précédentes, caractérisé en ce que l'organe d'échappement (5) pour l'eau pure est formé par un robinet à eau.
